(19) Europäisches Patentamt
European Patent Office
Office européen des brevets

(11) **EP 4 661 181 A1**

(12) **EUROPEAN PATENT APPLICATION**
published in accordance with Art. 153(4) EPC

(43) Date of publication:
**10.12.2025 Bulletin 2025/50**

(21) Application number: **24749760.5**

(22) Date of filing: **02.02.2024**

(51) International Patent Classification (IPC):
***H01M 50/282*** (2021.01)

(52) Cooperative Patent Classification (CPC):
**B60L 50/64; H01M 10/615; H01M 10/625;
H01M 50/233; H01M 50/236; H01M 50/24;
H01M 50/249; H01M 50/276; H01M 50/28;
H01M 50/282; H01M 50/593;** Y02E 60/10

(86) International application number:
**PCT/CN2024/075575**

(87) International publication number:
**WO 2024/160285 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023 CN 202310123761**

(71) Applicant: **BYD Company Limited
Shenzhen, Guangdong 518118 (CN)**

(72) Inventors:
• **TAN, Zhijia
Shenzhen, Guangdong 518118 (CN)**

• **WAN, Long
Shenzhen, Guangdong 518118 (CN)**
• **YANG, Fan
Shenzhen, Guangdong 518118 (CN)**
• **PENG, Qingbo
Shenzhen, Guangdong 518118 (CN)**
• **LU, Peng
Shenzhen, Guangdong 518118 (CN)**

(74) Representative: **Mathys & Squire
The Shard
32 London Bridge Street
London SE1 9SG (GB)**

(54) **BATTERY PACK COVER PLATE, BATTERY PACK AND VEHICLE**

(57) The present disclosure discloses a battery pack cover, a battery pack, and a vehicle. The battery pack cover (100) includes: a first substrate (10), where a thickness of the first substrate (10) is $a_1$, in mm, and a thermal conductivity of the first substrate (10) is $b_1$, in W/(m·K); and a second substrate (20), where the second substrate (20) is located on a side of the first substrate (10), a thickness of the second substrate (20) is $a_2$, in mm, and a thermal conductivity of the second substrate (20) is $b_2$, in W/(m·K), where the first substrate (10) and the second substrate (20) satisfy the following condition: $6.67 < a_1/b_1 + a_2/b_2 < 100.04$.

FIG. 2

EP 4 661 181 A1

**Description**

**CROSS-REFERENCE TO RELATED APPLICATIONS**

This application claims priority and benefits to Chinese Patent Application No. 202310123761.5, filed with the China National Intellectual Property Administration on February 2, 2023, which is incorporated herein by reference in its entirety.

**TECHNICAL FIELD**

The present disclosure relates to the field of vehicles, and in particular, to a battery pack cover, a battery pack, and a vehicle.

**BACKGROUND**

In the field of power batteries, existing package structures still have problems such as large sizes, heavy weights, and inconvenience to be highly integrated with vehicles.
Therefore, current battery pack covers, battery packs and vehicles still need to be improved.

**SUMMARY**

This application aims to alleviate or resolve at least one of the above mentioned problems to at least some extent.
In one aspect of this application, this application proposes a battery pack cover, including: a first substrate, where a thickness of the first substrate is $a_1$, in mm, and a thermal conductivity of the first substrate is $b_1$, in W/(m·K); and a second substrate, where the second substrate is located on a side of the first substrate, a thickness of the second substrate is $a_2$, in mm, and a thermal conductivity of the second substrate is $b_2$, in W/(m·K), where the first substrate and the second substrate satisfy the following condition: $6.67 < a_1/b_1 + a_2/b_2 < 100.04$. As a result, the battery pack cover has a good thermal insulation effect and may be used as a sealing structure for the battery pack. In addition, the battery pack cover has good supporting performance and may be used as a vehicle body floor structure, so that the battery pack cover can be highly integrated with the vehicle body floor. This saves installation space, reduces overall vehicle weight, and satisfies safety requirements under extreme working conditions.
In another aspect of this application, this application proposes a battery pack, including a battery, a tray, and the aforementioned battery pack cover, where the battery pack cover and the tray are connected to form an accommodation cavity for accommodating the battery. Therefore, the battery pack has all the features and advantages of the aforementioned battery pack cover. Details are not described herein again.
In still another aspect of this application, this application provides a vehicle, including a vehicle body floor, where the vehicle body floor includes the aforementioned battery pack cover. Therefore, the vehicle has all the features and advantages of the aforementioned battery pack cover. Details are not described herein again.

**BRIEF DESCRIPTION OF DRAWINGS**

The above and/or additional aspects and advantages of this application will become apparent and easily understood from descriptions of embodiments with reference to the following drawings, in which:

FIG. 1 shows a diagram of a structure of a vehicle body chassis assembly according to an embodiment of this application;
FIG. 2 shows a diagram of a structure of a battery pack cover according to an embodiment of this application;
FIG. 3 shows a diagram of a structure of a battery pack cover according to an embodiment of this application;
FIG. 4 shows a diagram of a structure of a battery pack cover according to an embodiment of this application;
FIG. 5 shows a diagram of a structure of a battery pack cover according to an embodiment of this application; and
FIG. 6 shows a diagram of a structure of a reinforcement fiber within a composite material plate according to an embodiment of this application.

Reference numerals:

first substrate 10; second substrate 20; third substrate 30; battery pack cover 100; metal sub-plate 111; third composite material plate 123; functional module 200; tray 300.

**EP 4 661 181 A1**

## DESCRIPTION OF EMBODIMENTS

Embodiments of this application are described in detail below, examples of which are shown in the accompanying drawings, where the same or similar reference numerals represent the same or similar elements or elements having the same or similar functions throughout. Embodiments described below with reference to the accompanying drawings are exemplary and are merely used to explain this application, and should not be construed as limiting this application.

In one aspect of this application, this application proposes a battery pack cover 100, including: a first substrate 10, where a thickness of the first substrate 10 is $a_1$, in mm, and a thermal conductivity of the first substrate 10 is $b_1$, in W/(m·K); and a second substrate 20, where the second substrate 20 is located on a side of the first substrate 10, a thickness of the second substrate 20 is $a_2$, in mm, and a thermal conductivity of the second substrate 20 is $b_2$, in W/(m·K). In this application, the inventor found through detailed theoretical analysis and experimental research that thermal resistance of the battery pack cover 100 is mainly limited by a thermal conductivity and a thickness of a material. The first substrate 10 and the second substrate 20 satisfy the following condition: $6.67 \leq a_1/b_1 + a_2/b_2 \leq 100.04$. Within a range of this formula, the battery pack cover 100 has excellent thermal insulation performance, and the battery pack can satisfy a condition that time required for the battery pack to drop from 20 °C to 0 °C is no shorter than 15h in a -10 °C environment. This enables the battery pack to strike a balance between thermal insulation performance and energy density, thereby facilitating full utilization of battery performance. The battery pack cover 100 has good thermal insulation effect and may be used as a sealing structure for the battery pack. In addition, the battery pack cover has good supporting performance and may be used as a vehicle body floor structure, so that the battery pack cover 100 can be highly integrated with the vehicle body floor. This saves installation space, reduces overall vehicle weight, and satisfies safety requirements under extreme working conditions.

According to some embodiments of this application, the thickness $a_1$ of the first substrate 10 may be 0.4 mm to 2.5 mm. When the thickness of the first substrate 10 is 0.4 mm to 2.5 mm, the first substrate 10 has higher strength and better load-bearing support effect, occupies less space, and has less impact on the overall vehicle weight

According to some embodiments of this application, the thermal conductivity $b_1$ of the first substrate 10 may be 40 W/(m·K) to 80 W/(m·K), thereby improving uniform thermal performance of the battery pack cover 100.

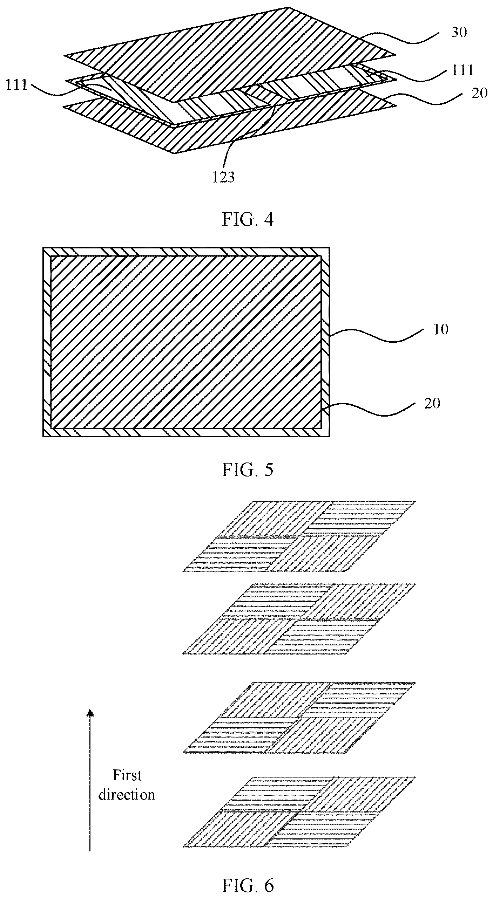

According to some embodiments of this application, the first substrate 10 may be a metal plate, and a type of the metal plate is not particularly limited. Specifically, the metal plate may be a galvanized steel plate. In some embodiments, a density of a galvanized surface of the galvanized steel plate may be 40 g/m² to 80 g/m². The battery pack cover 100 may have a better load-bearing support function through configuration of the metal plate. According to some embodiments of this application, the second substrate 20 may be a composite material plate. The composite material plate may be a resin-based composite material plate. The composite material plate has a lower thermal conductivity than the metal plate and has better thermal insulation performance. The composite material plate further has electrical insulation properties and can effectively satisfy high-voltage safety requirements of the battery pack cover 100. The composite material plate includes a matrix resin and a reinforcement fiber. The matrix resin of the composite material plate may include at least one of epoxy resin, polyamide resin, polyurethane resin, polyimide resin, polysulfone resin, and phenolic resin. According to some other embodiments of this application, the reinforcement fiber may be a fiber material having a melting point of 700 °C or higher. Specifically, the reinforcement fiber may include at least one of a glass fiber and a ceramic fiber. Referring to FIG. 6, because the reinforcement fiber within the composite material plate is arranged in a fabric layup with good fabric anisotropic performance, the reinforcement fiber within the composite material plate may be in a stacking manner including but not limited to that shown in FIG. 6. The glass fiber is used as an example. Orientations of adjacent glass fibers in a same fiber layer may be perpendicular to each other, thereby effectively improving support performance and tensile strength of the composite material plate. An included angle between orientations of glass fibers in adjacent fiber layers stacked in a first direction is not particularly limited. A person skilled in the art may adjust the included angle between the orientations of the glass fibers in the adjacent fiber layers based on an actual condition.

According to some embodiments of this application, the thickness of the second substrate 20 may be 0.5 mm to 2.5 mm. According to some embodiments of this application, the thickness of the second substrate 20 may be 0.8 mm to 2.0 mm. When the thickness of the second substrate 20 is 0.5 mm to 2.5 mm, the thickness of the second substrate 20 is moderate, and the battery pack cover 100 occupies a small space. This can ensure effective support strength and delay heat transfer in the event of thermal runaway. When the second substrate 20 is a composite material plate, in the event of flame burning, within the above thickness range, the matrix resin of the composite material is gradually carbonized and falls off as a temperature rises. However, the reinforcement fiber has excellent high temperature resistance. When the matrix resin is carbonized and falls off, a physical structure of the reinforcement fiber can still be maintained, greatly delaying heat transfer. In addition, the physical structure of the reinforcement fiber may further provide support between the battery pack and the metal plate, thereby avoiding arcing between the battery pack and the metal plate due to an excessively small gap, and effectively improving breakdown voltage withstand performance of the battery pack cover 100.

According to some embodiments of this application, the thermal conductivity $b_2$ of the second substrate 20 may be 0.03 W/(m·K) to 0.12 W/(m·K). Therefore, thermal insulation performance of the battery pack cover 100 can be

3

significantly improved through configuration of the second substrate 20, thereby effectively resolving the problem of low power of the battery pack at a low temperature.

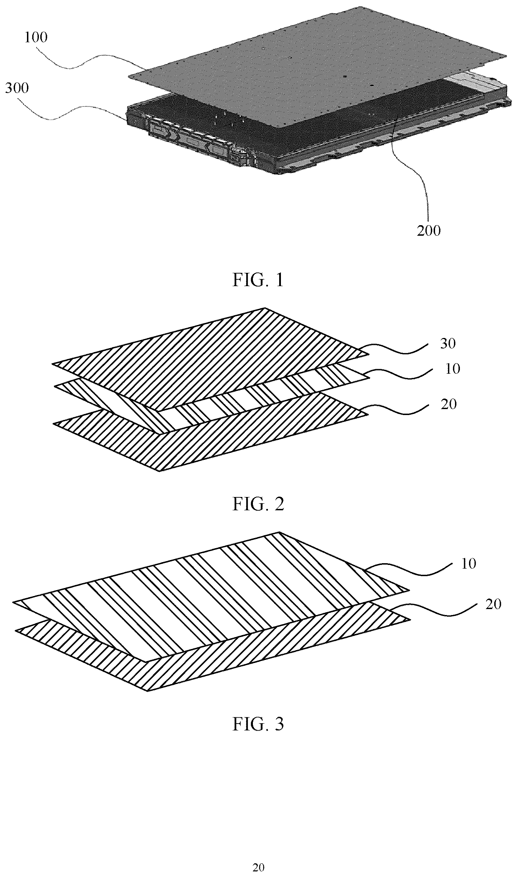

Referring to FIG. 2 and FIG. 3, according to some embodiments of this application, the first substrate 10 may be a whole layer of metal plate.

Referring to FIG. 3, according to some embodiments of this application, when the first substrate 10 is the whole layer of metal plate, the second substrate 20 may be located only on a surface on a side of the metal plate, and the second substrate 20 may be a composite material plate. In this case, a surface on a side of the metal plate that is away from the composite material plate may have an anti-corrosion layer, and a material of the anti-corrosion layer may be an epoxy resin. During actual use, the composite material plate needs to be disposed facing toward a functional module, such as facing toward a battery module. The composite material plate is used to cover the metal plate on a side, and a surface on a side of the metal plate not covered by the composite material plate may be formed with an anti-corrosion layer through an electrophoresis process to ensure anti-corrosion performance of the metal plate, thereby striking a balance between thermal insulation performance and electrical insulation performance of the battery pack cover plate 100.

According to some embodiments of this application, the electrophoretic process for forming the anti-corrosion layer on the surface of the metal plate is not particularly limited, provided that the anti-corrosion layer formed can improve the anti-corrosion performance of the metal plate. The electrophoretic process may include pretreatment, acid cleaning, alkaline cleaning, phosphating, epoxy coating, electrophoretic paint deposition, baking, and the like of the metal plate.

According to some embodiments of this application, when the first substrate 10 is a whole layer of metal plate and the second substrate 20 is located on a surface on a side of the metal plate, an orthographic projection of the second substrate 20 onto the first substrate 10 may be located inside the first substrate 10. That is, the second substrate 20 is disposed on a partial region of a surface on at least one side of the first substrate 10. According to some embodiments of this application, the second substrate 20 may be a composite material plate. The second substrate 20 may be disposed corresponding to a battery, for example, the second substrate 20 may completely cover an upper surface of the battery.

Specifically, referring to FIG. 5, the first substrate 10 is a whole layer of metal plate, the second substrate 20 is a composite material plate, and the second substrate 20 is disposed on the partial region of the surface on the side of the first substrate 10. Surface anti-corrosion treatment such as electrophoresis may be performed on a region of a surface of the metal plate on which the composite material plate is disposed, that is not covered by the composite material plate. During assembly of the battery pack, the composite material plate may be disposed facing toward a battery, to give full play to thermal insulation performance of the battery pack cover 100 and effectively prevent arcing after short circuit and thermal runaway. When the composite material plate is disposed on the partial region of the surface on the side of the metal plate, the edge of the metal plate extends beyond the edge of the composite material plate. When manufacturing the battery pack cover plate 100, a hole structure for connecting with other components is formed in an edge region of the metal plate extending beyond the composite material plate through a processing process such as a stamping process. Through such configuration, the composite material plate may not interfere with the hole structure. Therefore, after the composite material plate is fastened to the metal plate through a process such as hot pressing or gluing, no hole structure needs to be formed on the composite material plate again through a stamping process. This simplifies a process flow and improves a product yield. According to some other embodiments of this application, when the composite material plate is disposed on the partial region of the surface on the side of the metal plate, a distance between the edge of the metal plate and the edge of the composite material plate may be 10 mm to 40 mm, thereby leaving a processing region enough for the hole structure. The surface of the metal plate may further have the anti-corrosion layer, which may be made of an epoxy resin. This can satisfy requirements for thermal insulation performance and electrical insulation performance of the battery pack cover 100. When the battery pack cover 100 is used as a vehicle body floor, it is beneficial to a fixed connection between the vehicle body floor and a tray.

In the descriptions of this application, "a plurality of" means two or more.

It may be understood that when the first substrate 10 is the metal plate, a thermal conductivity of the metal plate is the thermal conductivity of the first substrate 10. When a reinforcement structure is disposed around the first substrate 10, the thermal conductivity is calculated based on heat transfer in a direction Z of the first substrate 10, so that only a part of the metal plate with good thermal conductivity needs to be calculated. In this case, the thermal conductivity of the first substrate 10 is still the thermal conductivity of the metal plate.

According to some embodiments of this application, the battery pack cover 100 may further include a third substrate 30, where the third substrate 30 is a composite material plate. The third substrate 30 is located on a side of the first substrate 10 that is away from the second substrate 20, that is, the first substrate 10 is sandwiched between the second substrate 20 and the third substrate 30. A thickness $a_3$ (in mm) and a thermal conductivity $b_3$ (in W/(m·K)) of the third substrate 30 needs to satisfy $6.67 \leq a_1/b_1 + a_2/b_2 + a_3/b_3 \leq 100.04$. When the battery pack cover 100 includes the first substrate 10, the second substrate 20, and the third substrate 30 sandwiched between the first substrate 10 and the second substrate 20, better anti-corrosion effect can be achieved for the metal plate through the composite material plate, and higher structural strength and thermal resistance, as well as better thermal insulation performance can be achieved when compared with the battery pack cover 100 including only the first substrate 10 and the second substrate 20.

According to some embodiments of this application, the thickness $a_3$ of the third substrate 30 may be 0.5 mm to 2.5 mm. When the thickness of the third substrate 30 is 0.5 mm to 2.5 mm, the thickness of the third substrate 30 is moderate, and the battery pack cover 100 occupies a small space. In the event of thermal runaway, such as flame burning, corresponding physical isolation may be formed, and breakdown voltage withstand performance of the battery pack cover 100 may be effectively improved through a physical gap.

According to some embodiments of this application, the thermal conductivity $b_3$ of the third substrate 30 may be 0.03 W/(m·K) to 0.12 W/(m·K). Therefore, thermal insulation performance of the battery pack cover 100 can be significantly improved through configuration of the third substrate 30, thereby effectively resolving the problem of low power of the battery pack at a low temperature.

Referring to FIG. 2, according to some embodiments of this application, when the first substrate 10 is a whole layer of metal plate, the metal plate may be sandwiched between a first composite material plate (namely, the second substrate 20) and a second composite material plate (namely, the third substrate 30). Two composite material plates are used to completely cover an upper surface and a lower surface of the metal plate, so that overall stiffness of the battery pack cover 100 can be effectively improved. The composite material plates may further effectively isolate the metal plate from a complex external environment to achieve anti-corrosion effect. According to some other embodiments of this application, when the metal plate is sandwiched between the first composite material plate (namely, the second substrate 20) and the second composite material plate (namely, the third substrate 30), a size of the metal plate needs to be smaller than a size of the composite material plate, to achieve complete covering of the metal plate by the composite material plate.

According to some embodiments of this application, a distance between an edge of the orthographic projection of the metal plate onto the first composite material plate and an edge of the first composite material plate may be 2 mm to 10 mm. In this way, edge sealing of the metal plate and physical isolation of the metal plate from the outside world can be achieved while satisfying requirements for thermal insulation performance, electrical insulation performance, and strength of the battery pack cover 100, thereby preventing the metal plate from rusting and corroding.

According to some embodiments of this application, the battery pack cover 100 may further include a reinforcement structure, the reinforcement structure is a composite material plate, and the reinforcement structure is at least partially disposed around the metal plate. Specifically, referring to FIG. 4, the composite material plate may include a first composite material plate (namely, the second substrate 20) and a second composite material plate (namely, the third substrate 30). The metal plate of the first substrate 10 may include at least one metal sub-plate 111, and a third composite material plate 123 (namely, the reinforcement structure) in a frame structure is disposed around the metal sub-plate 111. The metal plate (including the at least one metal sub-plate 111) and the third composite material plate 123 together form an intermediate plate, and the intermediate plate is sandwiched between the first composite material plate (namely, the second substrate 20) and the second composite material plate (namely, the third substrate 30). Two composite material plates are used to completely cover an upper surface and a lower surface of the metal plate Performance, so that overall stiffness and thermal insulation performance of the battery pack cover 100 can be effectively improved. The composite material plates may further effectively isolate the metal plate from a complex external environment to achieve anti-corrosion effect. In addition, the metal plate is divided into a plurality of metal sub-plates that are fastened to each other through the third composite material plate, so that an overall weight of the battery pack cover 100 can be effectively reduced. During assembly of the battery pack cover 100, a hanging point may be disposed on a third composite material plate to avoid corrosion and rust of the metal plate due to cutting. In addition, the hanging point is disposed on the third composite material plate, to fasten the battery pack cover 100, and a metal processing technology required for a whole layer of metal plate structure can be eliminated, thereby significantly reducing preparation costs.

According to some embodiments of this application, a distance between an edge of the metal sub-plate and an outer edge of the third composite material plate is 10 mm to 50 mm, to achieve corrosion protection of the edges and ensure overall rigidity of the upper cover. The outer edge of the third composite material plate 123 is an edge of a side of the third composite material plate 123 that is away from the metal sub-plate 111. In this way, edge sealing of the metal plate and physical isolation of the metal plate from the outside world can be achieved while satisfying requirements for electrical insulation performance and strength of the battery pack cover 100, thereby preventing the metal plate from rusting and corroding.

According to some embodiments of this application, the method for combining and fastening the metal plate with the composite material plate in this application is not particularly limited. For example, a hot pressing process may be used to cause the composite material plate to flow and fill the surface of the metal plate during hot pressing, and then be fastened to the metal plate after curing, thereby achieving composite formation of the metal plate with the composite material plate.

The battery pack cover 100 in this application has at least the following advantages:

1. In this application, composite formation of the metal plate with the high-strength high-modulus composite material plate substantially improves strength and stiffness of the battery pack cover 100, thereby achieving better protection for a cell against squeezing of the battery pack cover 100.

2. Because the thermal conductivity of the composite material plate is lower than that of the metal plate, the battery pack cover 100 in this application has higher thermal resistance than a pure-metal battery pack cover 100, and has better thermal insulation performance. This effectively resolves the problem of low power of the battery pack at a low temperature.

3. Because a surface, which is in contact with a live component inside the battery pack, of the battery pack cover 100 in this application is a composite material plate, electrical insulation properties of the composite material plate can satisfy high voltage safety requirements and prevent the risk of arcing caused by a small electrical gap.

4. When the battery pack experiences thermal runaway, a protective layer on a metal surface of a conventional metal battery pack cover 100 falls off when burned by flames, resulting in exposed metal. When the battery pack cover 100 in this application is burned by flames, a reinforcement fiber of the battery pack cover may achieve physical isolation, thereby preventing arcing and breakdown caused by contact between the metal plate and a conductor, and improving safety of passengers in a cabin.

In the descriptions of this application, it should be understood that an orientation or a position relationship indicated by the terms "width", "thickness", "up", "down", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, regardless of whether the word "about" or "approximately" is used, all numbers disclosed herein are approximate values. A value of each number may differ by less than 10% or by a difference that is considered reasonable by a person skilled in the art, such as 1%, 2%, 3%, 4%, or 5%.

According to some embodiments of this application, a method for measuring a thickness of a substrate includes: measuring the thickness of the substrate using a vernier scale.

According to some embodiments of this application, a method for measuring a thermal conductivity of a substrate includes: performing a test using the ASTM C518-21 test method.

In another aspect of this application, this application proposes a battery pack, including a battery, a tray, and the aforementioned battery pack cover 100, where the battery pack cover 100 and the tray are connected to form an accommodation cavity for accommodating the battery. Therefore, the battery pack has all the features and advantages of the aforementioned battery pack cover 100. Details are not described herein again.

According to some embodiments of this application, the second substrate 20 may be disposed facing toward the accommodation cavity in the battery pack, so that good thermal insulation performance and electrical insulation performance of the second substrate 20 can be utilized to improve structural stability and safety performance of the battery pack.

In still another aspect of this application, this application provides a vehicle, including a vehicle body floor, where the vehicle body floor includes the aforementioned battery pack cover 100. Therefore, the vehicle has all the features and advantages of the aforementioned battery pack cover 100. Details are not described herein again.

Referring to FIG. 1, according to some embodiments of this application, the vehicle may include a vehicle body chassis assembly, and the vehicle body chassis assembly includes a vehicle body floor, a functional module 200, and a tray 300. The vehicle body floor and the tray 300 sandwich the functional module 200, and the vehicle body floor and the tray are connected to form an accommodation cavity for accommodating the functional module.

According to some embodiments of this application, the metal plate shall cover the functional module as much as possible, for example, the area of the metal plate may be consistent with a cross-sectional area of the functional module, thereby effectively improving pedal strength of the vehicle body floor.

According to some embodiments of this application, silicone foam may be used to fit and compress the surface of the vehicle body floor and a bottom beam of the entire vehicle to achieve sealing effect.

According to some embodiments of this application, the functional module may include a battery module. Specifically, the functional module may include at least one of a cell, the battery module, and a battery pack.

The solution of this application is described below by using specific embodiments. It should be noted that the following embodiments are merely used to illustrate this application and should not be considered as limiting the scope of this application. If no specific techniques or conditions are specified in embodiments, the techniques or conditions described in literature in the art or product instructions shall be followed. Reagents and instruments used without indicating a manufacturer are all conventional products that can be purchased commercially.

Structures of battery pack covers in Examples 1 to 16 and 22 are shown in FIG. 3, in which a second substrate covers a surface on a side of a first substrate. Structures of battery pack covers in Examples 17, 20, and 21 are shown in FIG. 2, in which a first substrate is sandwiched between a second substrate and a third substrate. A structure of a battery pack cover in Example 18 is shown in FIG. 4, in which a first substrate is sandwiched between a second substrate and a third substrate, the first substrate includes two metal sub-plates, and a reinforcement structure is disposed around the metal sub-plates. A structure of the battery pack cover in Example 19 is shown in FIG. 5, in which a second substrate is disposed on a partial region of a surface on a side of a first substrate.

Structures of battery pack covers in Comparative Examples 1 and 2 are shown in FIG. 3, in which a second substrate covers a surface on a side of a first substrate. Specific parameters of the substrate of each Example and Comparative Example are shown in Table 1.

Table 1

| Sample | Thickness $a_1$ of the first substrate/ mm | Thermal conductivity $b_1$ of the first substrate/ W/(m·K) | Thickness $a_2$ of the second substrate/ mm | Thermal conductivity $b_2$ of the second substrate/ W/(m·K) | Thickness $a_3$ of the third substrate/ mm | Thermal conductivity $b_3$ of the third substrate/W/ (m·K) | $a_1/b_1 + a_2/b_2$ | $a_1/b_1 + a_2/b_2 + a_3/b_3$ |
|---|---|---|---|---|---|---|---|---|
| Example 1 | 0.4 | 46 | 0.8 | 0.04 | / | / | 20.009 | / |
| Example 2 | 0.8 | 46 | 0.8 | 0.04 | / | / | 20.017 | / |
| Example 3 | 0.6 | 46 | 0.8 | 0.04 | / | / | 20.013 | / |
| Example 4 | 2 | 46 | 0.8 | 0.04 | / | / | 20.043 | / |
| Example 5 | 2.5 | 46 | 0.8 | 0.04 | / | / | 20.054 | / |
| Example 6 | 0.8 | 40 | 0.8 | 0.04 | / | / | 20.020 | / |
| Example 7 | 0.8 | 80 | 0.8 | 0.04 | / | / | 20.010 | / |
| Example 8 | 0.8 | 46 | 0.5 | 0.05 | / | / | 10.017 | |
| Example 9 | 0.8 | 46 | 0.6 | 0.04 | / | / | 15.017 | |
| Example 10 | 0.8 | 46 | 1.2 | 0.04 | / | / | 30.017 | / |
| Example 11 | 0.8 | 46 | 2.0 | 0.04 | / | / | 50.017 | / |
| Example 12 | 0.8 | 46 | 2.5 | 0.04 | / | / | 62.517 | / |
| Example 13 | 0.8 | 46 | 0.8 | 0.03 | / | / | 26.684 | / |
| Example 14 | 0.8 | 46 | 0.8 | 0.06 | / | / | 13.351 | / |
| Example 15 | 0.8 | 46 | 0.8 | 0.09 | / | / | 8.906 | / |
| Example 16 | 0.8 | 46 | 0.8 | 0.12 | / | / | 6.684 | |
| Example 17 | 0.8 | 46 | 0.8 | 0.04 | 0.6 | 0.04 | / | 35.0 17 |
| Example 18 | 0.8 | 46 | 0.8 | 0.04 | 1.2 | 0.06 | / | 40.0 17 |
| Example 19 | 0.8 | 46 | 0.8 | 0.04 | 2 | 0.09 | / | 42.2 40 |
| Example 20 | 2 | 50 | 1.0 | 0.05 | 2.4 | 0.03 | / | 100. 04 |
| Example 21 | 2.1 | 38 | 2.1 | 0.1 | 0.4 | 0.1 | / | 25.0 55 |
| Example 22 | 0.8 | 46 | 2.0 | 0.02 | / | / | 100.017 | / |
| Comparative Example 1 | 0.8 | 46 | 0.8 | 0.15 | / | / | 5.351 | / |
| Compara tive Example 2 | 0.5 | 30 | 2.5 | 0.02 | / | / | 125.017 | / |

The following performance tests are performed on the battery pack covers provided in the foregoing Examples and Comparative Examples:

Deformation: A force of 75 kgf is applied to a 10 mm diameter round bar to squeeze a side of the battery pack cover, and a depth of deformation is tested using a vernier scale and a level.

Thermal insulation performance: Time required for a temperature of the battery pack dropping from 20 °C to 0 °C in a -10 °C environment.

Electrical insulation and high-voltage withstand performance: DC 1000 V is applied to two main surfaces of the battery pack cover for 60s to test insulation resistance, with a test standard according to "GB/T 1408.1-2016 Electrical strength of insulating materials - Test methods - Part 1: Tests at power frequencies". AC 3000 V is applied to the two main surfaces of the battery pack cover for 60s, breakdown and sparking are recorded, and a leakage current is tested, with a test standard according to "GB/T 1408.1-2016 Electrical strength of insulating materials - Test methods - Part 1: Tests at power frequencies".

High-temperature and voltage withstand performance: A flame from a butane torch (with a flame temperature of about 1000 °C) is used to vertically spray the battery pack cover, and a side on which the composite material plate is located is placed in an outer flame region for 30 minutes, and an insulation withstand voltage of AC 1000 V is recorded after the fire.

Test results are shown in Table 2.

Table 2

| Sample | Extrusion deformation/ mm | Thermal insulation performance duration/h | Whether breakdown occurs | Whether sparking occurs | Leakage current/ mA | Whether a requirement for an insulation withstand voltage of AC 1000 V is satisfied |
|---|---|---|---|---|---|---|
| Example 1 | 1.9 | 15.6 | No | No | 1.9 | Yes |
| Example 2 | 1.6 | 16.2 | No | No | 1.87 | Yes |
| Example 3 | 1.7 | 16 | No | No | 2 | Yes |
| Example 4 | 1.4 | 16.4 | No | No | 2.35 | Yes |
| Example 5 | 0.8 | 11.2 | No | No | 2.87 | Yes |
| Example 6 | 1.9 | 12.8 | No | No | 1.85 | Yes |
| Example 7 | 1.87 | 13.4 | No | No | 1.78 | Yes |
| Example 8 | 1.8 | 15.2 | No | No | 2.78 | Yes |
| Example 9 | 1.72 | 15.6 | No | No | 2.65 | Yes |
| Example 10 | 1.4 | 11.5 | No | No | 2.32 | Yes |
| Example 11 | 1.15 | 18.2 | No | No | 2.56 | Yes |
| Example 12 | 1.4 | 19.0 | No | No | 2.75 | Yes |
| Example 13 | 1.63 | 16.8 | No | No | 2.67 | Yes |
| Example 14 | 1.56 | 15.8 | No | No | 2.43 | Yes |
| Example 15 | 1.58 | 15.4 | No | No | 2.26 | Yes |
| Example 16 | 1.37 | 15.2 | No | No | 2.13 | Yes |
| Example 17 | 1.41 | 20.2 | No | No | 2.25 | Yes |
| Example 18 | 1.36 | 23.5 | No | No | 2.46 | Yes |
| Example 19 | 1.12 | 26.5 | No | No | 2.92 | Yes |
| Example 20 | 1.1 | 11.9 | No | No | 2.85 | Yes |
| Example 21 | 1.9 | 15.6 | No | No | 1.9 | Yes |
| Example 22 | 1.26 | 19.6 | No | No | 2.93 | Yes |
| Comparative Example 1 | 1.62 | 9.2 | No | No | 2.08 | Yes |
| Comparative Example 2 | 1.7 | 21.3 | Yes | Yes | 5.2 | No |

The test results show that thermal insulation performance, extrusion resistance, high-voltage withstand performance, and high-temperature and high-voltage withstand performance of the battery pack covers in Examples 1 to 22 all meet a usage standard. Specifically, for the battery pack covers in Examples 1 to 22, the time required for the temperatures of the battery packs to drop from 20 °C to 0 °C in a -10 °C environment is longer than 10h. For the battery pack covers in Examples 1 to 22, when the force of 75 kgf is applied to the 10 mm diameter round bar to squeeze the sides of the battery pack covers, and the depths of deformation are tested using the vernier scale and the level, the deformation of the battery pack covers is less than 2 mm. According to "GB/T 1408.1-2016 Electrical strength of insulating materials - Test methods - Part 1: Tests at power frequencies", when DC 1000 V is applied to the two main surfaces of the battery pack covers in Examples 1 to 22 for 60s, the insulation resistance is greater than 50 GΩ. According to "GB/T 1408.1-2016 Electrical strength of insulating materials - Test methods - Part 1: Tests at power frequencies", when AC 3000 V is applied to the two main surfaces of the battery pack covers in Examples 1 to 22 for 60s, there is no breakdown or sparking, and the leakage currents are less than 3 mA. When the flame from the butane torch (with the flame temperature of about 1000 °C) is used to vertically spray the battery pack covers in Examples 1 to 22, and the sides on which the composite material plates are located are placed on fire in the outer flame region for 30 minutes, the requirement for the insulation withstand voltage of AC 1000 V is satisfied after the fire.

In Comparative Example 1, the thickness of the first substrate is 0.8 mm, and the thermal conductivity of the first substrate is 46 W/(m·K); and the thickness of the second substrate is 0.8 mm, and the thermal conductivity of the second substrate is 0.15 W/(m·K), where $a_1/b_1 + a_2/b_2$ is 5.351, which does not satisfy $6.67 \leq a_1/b_1 + a_2/b_2 \leq 100.04$. The thermal conductivity of the second substrate is excessively large, and thermal insulation performance of the battery pack cover is poor. In the -10 °C environment, the time required for the temperature of the battery pack to drop from 20 °C to 0 °C is only 9.2h. In Comparative Example 2, the thickness of the first substrate is 0.5 mm, and the thermal conductivity of the first substrate is 30 W/(m·K); and the thickness of the second substrate is 2.5 mm, and the thermal conductivity of the second substrate is 0.2 W/(m·K), where $a_1/b_1 + a_2/b_2$ is 125.017, which does not satisfy $6.67 \leq a_1/b_1 + a_2/b_2 \leq 100.04$. From the test results, it can be learned that when AC 3000 V is applied to the two surfaces of the battery pack cover for 60s, breakdown and sparking occur, and the leakage current is 5.2 mA, which does not satisfy the performance requirement for the insulation withstand voltage.

Unless otherwise defined, all technical and scientific terms used in this application have the same meaning as commonly understood by a person skilled in the art to which this application belongs. All patents and publications referred to in this application are incorporated by reference in their entirety into this application. The term "include" or "comprise" is an open expression, that is, including the contents specified in this application but not excluding other contents.

In the descriptions of this specification, the reference terms "an embodiment", "another embodiment", and the like mean that the specific features, structures, materials or characteristics described with reference to the embodiment are included in at least one embodiment of this application. In this specification, the exemplary expressions of the foregoing terms need not be directed to the same embodiment or example. In addition, in the descriptions of this specification, the described specific features, structures, materials, or characteristics may be combined in a proper manner in any one or more of embodiments or examples. In addition, a person skilled in the art may combine and associate different embodiments or examples and features of different embodiments or examples described in this specification without mutual contradiction. In addition, it should be noted that the terms "first" and "second" in this specification are merely intended for a purpose of description, and shall not be understood as an indication or implication of relative importance or implicit indication of a quantity of indicated technical features.

Although embodiments of this application have been shown and described above, it is understood that the foregoing embodiments are exemplary and are not to be construed as limitations on this application. A person of ordinary skill in the art may change, modify, replace and vary the foregoing embodiments within the scope of this application.

**Claims**

1. A battery pack cover (100), comprising:

   a first substrate (10), wherein a thickness of the first substrate (10) is $a_1$, in mm, and a thermal conductivity of the first substrate (10) is $b_1$, in W/(m·K); and
   a second substrate (20), wherein the second substrate (20) is located on a surface on a side of the first substrate (10), a thickness of the second substrate (20) is $a_2$, in mm, and a thermal conductivity of the second substrate (20) is $b_2$, in W/(m·K), wherein
   the first substrate (10) and the second substrate (20) satisfy the following condition:

   $$6.67 \leq a_1/b_1 + a_2/b_2 \leq 100.04.$$

2. The battery pack cover (100) according to claim 1, wherein $a_1$ is 0.4 mm to 2.5 mm, and $b_1$ is 40 W/(m·K) to 80 W/(m·K).

3. The battery pack cover (100) according to claim 2, wherein the first substrate (10) is a metal plate.

4. The battery pack cover (100) according to claim 3, wherein the battery pack cover (100) further comprises a reinforcement structure, the reinforcement structure is a composite material plate, and the reinforcement structure is at least partially disposed around the metal plate.

5. The battery pack cover (100) according to claim 1, wherein $a_2$ is 0.5 mm to 2.5 mm, and $b_2$ is 0.03 W/(m·K) to 0.12 W/(m·K).

6. The battery pack cover (100) according to claim 5, wherein the second substrate (20) is a composite material plate.

7. The battery pack cover (100) according to claim 6, wherein an orthographic projection of the second substrate (20) onto the first substrate (10) is located inside the first substrate (10).

8. The battery pack cover (100) according to claim 6, wherein $a_2$ is 0.8 mm to 2.0 mm.

9. The battery pack cover (100) according to claim 1, wherein the battery pack cover (100) further comprises: a third substrate (30), wherein the third substrate (30) is a composite material plate, the third substrate (30) is located on a side of the first substrate (10) that is away from the second substrate (20), a thickness of the third substrate (30) is $a_3$, in mm, and a thermal conductivity of the third substrate (30) is $b_3$, in W/(m·K), wherein $6.67 \leq a_1/b_1 + a_2/b_2 + a_3/b_3 \leq 100.04$.

10. The battery pack cover (100) according to claim 9, wherein $a_3$ is 0.5 mm to 2.5 mm, and $b_3$ is 0.03 W/(m·K) to 0.12 W/(m·K).

11. The battery pack cover (100) according to any one of claims 6 to 10, wherein a material of the composite material plate comprises a matrix resin and a reinforcement fiber, the matrix resin comprises at least one of epoxy resin, polyamide resin, polyurethane resin, polyimide resin, polysulfone resin, and phenolic resin, and the reinforcement fiber comprises at least one of glass fiber and ceramic fiber.

12. A battery pack, comprising a battery, a tray (300), and the battery pack cover (100) according to any one of claims 1 to 11, wherein the battery pack cover (100) and the tray (300) are connected to form an accommodation cavity for accommodating the battery.

13. The battery pack according to claim 12, wherein the second substrate (20) is disposed facing toward the accommodation cavity.

14. A vehicle, comprising a vehicle body floor, wherein the vehicle body floor comprises the battery pack cover (100) according to any one of claims 1 to 11.

100

300

200

FIG. 1

30

10

20

FIG. 2

10

20

FIG. 3

20

FIG. 4

FIG. 5

First
direction

FIG. 6

## INTERNATIONAL SEARCH REPORT

| | International application No. |
|---|---|
| | **PCT/CN2024/075575** |

### A. CLASSIFICATION OF SUBJECT MATTER

H01M 50/282(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 板, 导热, 传热, 传导, 系数, 复合, battery, cell, plate, heat, conduct+, thermal, composit+

### C. DOCUMENTS CONSIDERED TO BE RELEVANT

| Category* | Citation of document, with indication, where appropriate, of the relevant passages | Relevant to claim No. |
|---|---|---|
| X | CN 109686887 A (HEFEI UNIVERSITY OF TECHNOLOGY) 26 April 2019 (2019-04-26) description, paragraphs 3 and 26-48, and figures 1-3 and 8 | 1-14 |
| X | CN 102117945 A (INDUSTRIAL TECHNOLOGY RESEARCH INSTITUTE) 06 July 2011 (2011-07-06) description, paragraphs 10-120, and figures 1-6 | 1-14 |
| A | CN 216033015 U (BYD CO., LTD. et al.) 15 March 2022 (2022-03-15) entire document | 1-14 |
| A | CN 216288737 U (BYD CO., LTD.) 12 April 2022 (2022-04-12) entire document | 1-14 |
| A | WO 2017090676 A1 (MITSUBISHI PLASTICS, INC.) 01 June 2017 (2017-06-01) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 May 2024** | **09 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075575**

| Patent document cited in search report | | | Publication date (day/month/year) | Patent family member(s) | | | Publication date (day/month/year) |
|---|---|---|---|---|---|---|---|
| CN | 109686887 | A | 26 April 2019 | None | | | |
| CN | 102117945 | A | 06 July 2011 | None | | | |
| CN | 216033015 | U | 15 March 2022 | None | | | |
| CN | 216288737 | U | 12 April 2022 | None | | | |
| WO | 2017090676 | A1 | 01 June 2017 | JPWO | 2017090676 | A1 | 06 September 2018 |
| | | | | JP | 6717321 | B2 | 01 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310123761